# EUROPEAN PATENT SPECIFICATION

(11) **EP 3 985 846 B1**
(45) Date of publication and mention of the grant of the patent: **10.12.2025**
(21) Application number: 20929679.7
(22) Date of filing: 17.08.2020
(51) Int. Cl.: H02K 29/08, H02K 9/22, H02K 19/12

(54) **SEPARATELY EXCITED ELECTRIC BRUSHLESS RELUCTANCE MOTOR**
FREMDERREGTER ELEKTRISCHER BÜRSTENLOSER RELUKTANZMOTOR
MOTEUR ÉLECTRIQUE SANS COLLECTEURS À RÉLUCTANCE AVEC EXCITATEUR INDÉPENDANT

(43) Date of publication of application: 20.04.2022
(73) Proprietor: MEGAWATT TECHNOLOGY Oy, 00180 Helsinki (FI)
(72) Inventor: POPPEL, Anton Dmitrievich, Moscow 109125 (RU); FEDICHEV, Ilya Mihaylovich, Moscow 117513 (RU)
(74) Representative: Chimini, Francesco
(86) International application number: PCT/RU2020/000436
(87) International publication number: WO 2022/039612

(56) References cited:
- EP-A2- 2 944 015
- JP-B2- 3 724 416
- RU-C1- 2 358 371
- RU-C1- 2 609 466
- RU-C1- 2 609 466
- RU-C1- 2 695 320
- US-A1- 2013 221 788

## Description

### FIELD OF THE INVENTION

The present disclosure relates to the field of electrical engineering, more specifically, to the electric brushless separately excited reluctance motors.

### BACKGROUND

No-contact inductor electronically commutated electric machine with electromagnetic excitation is known from the prior art (RU 2277284 C2, 27.05.2006). A no-contact inductor electronically commutated electric machine with electromagnetic excitation comprising a body with the installed stator packs laminated with the electrotechnical steel sheets (the number of the stator packs being a multiple of two, the same stator packs featuring phase winding slots the number of which is a multiple of three), the phase windings stacked into the stator pack slots so that their winds in the winding slot parts are parallel to the longitudinal axis of the machine and one wind embraces all the stator pack teeth arranged opposite one another, the excitating winding with the longitudinal axis that is parallel to the machine's longitudinal axis and is arranged on the stator between the stator packs, a non-magnetic metal shaft with a bushing made from a magnetically soft material set on the said shaft (with the serrated rotor packs laminated with magnetically soft steel sheets that are installed on the said bushing, the number of the said steel sheets equaling the number of stator packs) and two covers with bearings; wherein the total number of the phase windings is greater than three and their number is a multiple of three; moreover, each three phase windings have their own independent zero point and a phase shift angle exists between the adjacent phases of different triads; wherein the ratio between the number of stator teeth Zst and the number of rotor teeth Zr is expressed as a fraction where the number of rotor teeth is a prime number starting from five (5, 7, 11, 13, 17...). Furthermore, the prior art document US 2013/221788 A1 discloses a hybrid excitation rotating electrical machines, and more particularly an hybrid excitation rotating electrical machines using both a permanent magnet and an electromagnet as an exciting circuit.

The disadvantages of this technical solution are its heavy structure, high magnetic losses, inoperability at high temperatures and low thermal conductivity; also, this solution does not allow changing the rotor magnetic field and speeding up the motor without generating a reverse electromotive force and has a low performance factor.

The claimed invention obviates the above disadvantages and enables achieving the claimed technical result.

### DISCLOSURE OF THE INVENTION

The technical problem to be solved by the claimed invention is the creation of a compact separately excited brushless electric reluctance motor without permanent magnets, characterized by low weight, possibility of operating at high temperatures, possibility of changing the rotor magnetic field and of speeding up the motor without generating a reverse electromotive force and having high thermal conductivity and high performance factor.

The aim of this invention is to increase the performance factor value, to reduce magnetic losses, to provide for the possibility of the rotor magnetic field variation and of the motor speeding up without the reverse electromotive force generation, to boost the cooling efficiency providing for the high temperature operation, to increase the thermal conductivity and to reduce the motor weight.

The specified problem is solved by the separately excited brushless electric reluctance motor according to claim 1.

The motor body additionally features a liquid cooling jacket made in the form of swirl elements arranged throughout the body surface.

The swirl elements are made in the form of projections that are sized and shaped to allow multiple cooling liquid passes through one and the same motor surface section at minimum flow velocity and to provide for maximum heat extraction.

The electric motor additionally comprises the rotor position sensor consisting of a magnetic system and of the magnetic field concentrators, the said sensor being arranged on the rear motor shield.

### BRIEF DESCRIPTION OF DRAWINGS

- Fig. 1 . - Motor constructional design;
- Fig. 2a - Motor excitation coil;
- Fig. 2b - Motor excitation coil, cross-section A-A;
- Fig. 3 - Closed magnetic flux layout view;
- Fig. 4 - Layout view of the thermal flux directed towards the outer motor surface.

### EMBODIMENTS OF THE INVENTION

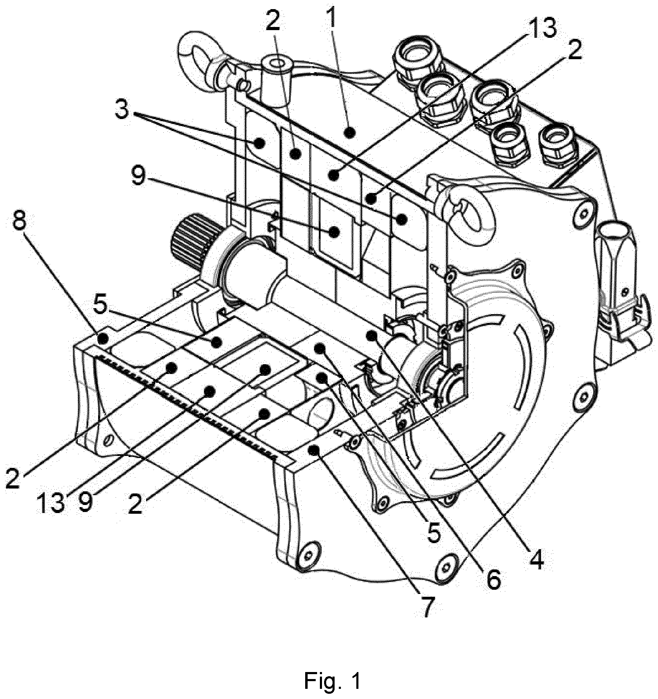

The claimed motor is configured with independent excitation coil and without permanent magnets. The claimed motor comprises a body, a rotor, a stator, a stator phase winding, a shaft with a bushing, an excitation coil, a spacer plate and front and rear shields with bearings ( Fig. 1 ).

The body 1 is made from a magnetically soft material and is part of the stator; the magnetic flux generated by the excitation coil is closed along the said body. The stator iron is tightly set inside the body, the same stator iron being in the form of two packs (blocks) 2 of the stator laminated with the electrotechnical steel sheets featuring the phase winding 3 slots. The stator packs 2 are set at a distance one from another.

A rotor from a magnetically soft material is arranged inside of the stator, the same rotor consisting of the shaft 4 made from a non-magnetic material and the rotor packs (blocks) 5 consisting from the electrotechnical steel sheets set on the shaft 4 at a certain distance one from another, through the bushing 6 made from a magnetically soft material, that is part of the common magnetic circuit. The rotor and stator packs are arranged opposite one another, with a clearance.

The front 7 and rear 8 motor shields, as well as the shaft 4 are made from a non-magnetic material, which allows preventing the magnetic flux closing through the bearings located in the shields, the shaft being installed into the said bearings. In addition, the bearings are preserved from the magnetization due to the bushing 6 being made from a magnetically soft material; thus, the operating life of the bearings is greatly increased.

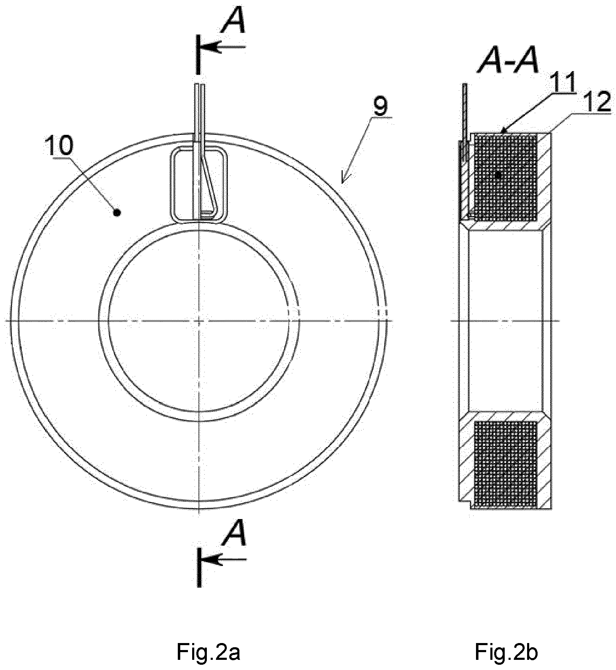

The excitation coil 9 is made in the form of a ring and constitutes a wound wire enclosed in its own body 10 (the wire is wound onto the inner part of its body) made from aluminum ( Fig. 2a, 2b ). The coil 9 is tightly set inside the stator between two rotor packs 5. The winding method and the coil fixation method allow for a very precise machining of the coupling sizes and, thus, for a considerable decreasing of the heat-transfer resistance, providing for a motor operation at higher excitation currents. During the assembly process, an air gap is formed between the coil and the stator, inside of a regular coil stator, the same gap preventing the heat transfer process. The coil 9 of the claimed solution has the ferrule 11 made from a magnetically soft material. The ferrule is set onto the coil from its outer side (i.e., the outer coil body side is configured in the form of a ferrule), tightly clasps the wound wire 12 on one side and is arranged along the whole coil body length providing the maximum heat dissipation area.

The spacer plate 13 made from aluminum is arranged inside the motor stator, between the two stator packs 2. The spacer plate 13 adjoins the stator packs 2 with its lateral sides and the body 1 with its outer end surface; it is tightly connected to the excitation coil 9 (to the outer side of its body) with its inner end surface, with the ferrule being put onto the said coil (the coil with the ferrule are inserted into the spacer plate). This provides for an effective heat removal from the hottest motor part, the excitation coil 9.

Due to the spacer plate 13 and excitation coil 9 presence, their location and the way they are configured (as specified above), the heat dissipation efficiency and the motor cooling efficiency are improved and the motor weight is reduced (due to the use of aluminum which is a light material).

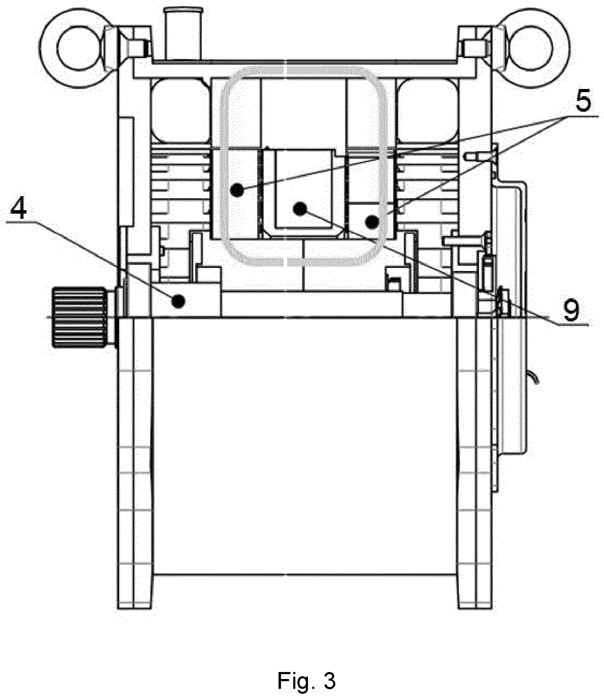

Fig. 3 shows the magnetic flux closure. The magnetic flux closes along the smaller length through the body 10, the first stator pack 2, the gap between the first stator pack 2 and the first rotor pack 5, the first rotor pack 5, the bushing 6, the second rotor pack 5, the gap between the second stator pack 2 and the second rotor pack 5 and the second stator pack 2, which allows for a considerable magnetic losses reduction and, thus, for the motor performance factor increase.

Additionally, the motor body can have a liquid cooling jacket made in the form of tailored swirl elements (projections) arranged throughout the body surface and providing for a turbulent liquid flow inside of the cooling jacket, which allows greatly increasing the surface cooling properties, boosting the heat dissipation efficiency and reducing the motor dimensions. The cooling liquid flow rate in the cooling system may be equal to 10 L/min. The projections are sized and shaped so as to generate multiple vortices at the said liquid flow rate; thus, the liquid passes through one and the same surface section multiple times which ensures the maximum heat extraction efficiency with minimal heat carrier velocity.

The motor can also be equipped with the rotor position sensor 14. The rotor position sensor 14 design allows determining the absolute rotor position within the accuracy of 20 degrees immediately after the power-up (before a slightest rotation have taken place), which provides for a most effective vector control at zero or near zero rotation speeds; this is a matter of great importance for the control system. And since the motors are installed on the electric cars, it allows determining the precise rotor position without any car jerks. The rotor position sensor consists of a magnetic system and the magnetic field concentrators. Three Hall sensors arranged at a pitch of 20 degrees relative one another are used for determining the absolute rotor position. This sensor is located at the rear motor shield.

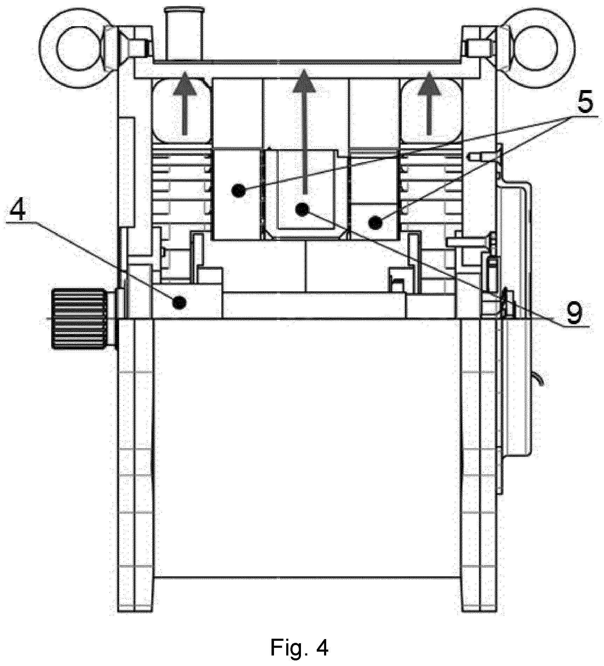

Fig. 4 shows the directions of the thermal flux moving towards the outer motor surface. During the motor operation the heat is transferred from the coil wire to its body and the tightly clasping body ferrule; in its turn, the ferrule transfers the heat to the spacer plate that is tightly connected to the ferrule, and the spacer plate transfers the heat further on to the motor body to which it adheres tightly. The heat also comes to the body from the stator winding. The heat can be carried away to the outside with the help of the liquid cooling jacket described above.

The design of the motor with independent excitation coil and without permanent magnets allows changing the rotor magnetic field and increasing the motor rpm speed without the reverse electromotive force generation and, thus, without the performance factor losses. The absence of the permanent magnets allows the motor to operate at higher temperatures without the risk of overheating. The maximum permissible motor operation temperature is 200 °C. The shields made from a non-magnetic material, the shaft made from a non-magnetic material and the bushing made from a magnetically soft material allow preserving the bearings from magnetization, considerably decreasing the magnetic losses and increasing the performance factor within the whole speed range. The excitation coil and the stator spacer plate allow organizing a highly efficient process of heat removal from the hottest motor area and operating with high excitation currents. Also, the stator iron that is tightly set inside the body allows cutting the magnetic losses within the gap to a minimum and provides for a high thermal conductivity, which made it possible to create a compact and light motor and to arrange the system as close to the heat source as possible.

The independent vector motor control allows controlling the magnetic field strength in the gap between the rotor and stator in two ways: by controlling the stator current and by controlling the excitation coil current. This allows both accelerating the motor to 10,000 rpm without performance factor losses and creating maximum moment at zero speed. These conditions best suit the electric cars since, on the one hand, it is possible to drive with the speed of 180 km/h and, on the other hand, it is possible to run over obstacles at minimum speed without running-in. The rotor position sensor provides for a smooth stepless rotor rotation within the whole speed range.

## Claims

1. A separately excited brushless electric reluctance motor that comprises:
- a body (1) with two stator packs (2) featuring slots for stacking the phase windings (3). a shaft (4) made from non-magnetic material and having a bushing (6) made from a magnetically soft material set on it, two rotor packs (5) are set on the bushing (6),
- a front (7) and a rear (8) shields with bearings, with the shaft (4) installed in them, wherein a toroidal excitation coil (9) is tightly set radially inside the stator and axially between the rotor packs (5) and an aluminum spacer plate (13) is set axially between the stator packs (2),
**characterized in that** the said excitation coil (9) being in the form of a wound wire enclosed in an aluminum body (10) featuring on its radially outer side a ferrule (11) tightly clasping the wound wire,
and **in that** the spacer plate (13) adjoins the stator packs (2) with its lateral sides, the body (1) with its radially outer end surface and the radially outer side of the excitation coil body (10) with its radially inner end surface.

2. An electric motor according to claim 1 wherein the motor body (1) additionally features a liquid cooling jacket made in the form of swirl elements arranged throughout the body surface.

3. An electric motor according to claim 2 wherein the swirl elements are made in the form of projections that are sized and shaped so as to generate multiple vortices at a liquid flow rate.

4. An electric motor according to claim 1 wherein the electric motor additionally comprises the rotor position sensor (14) consisting of a magnetic system and the magnetic field concentrators, the said sensor (14) being arranged on the rear motor shield.

## Patentansprüche

1. Fremderregter elektrischer bürstenloser Reluktanzmotor, umfassend:
einen Körper (1) mit zwei Statorpaketen (2), die Nuten zum Stapeln der Phasenwicklungen (3) aufweisen,
eine Welle (4), die aus nichtmagnetischem Material hergestellt wird und aufweisend eine Buchse (6), die aus weichmagnetischem Material hergestellt wird und auf ihr angeordnet ist, wobei zwei Rotorpakete (5) auf der Buchse (6) angeordnet sind,
einen vorderen Schild (7) und einen hinteren Schild (8) mit Lagern, in welchen die Welle (4) eingebaut wird,
wobei eine toroidale Erregerspule (9) radial innen des Stators und axial zwischen den Rotorpaketen (5) dicht angeordnet ist und einer Abstandsplatte aus Aluminium (13) axial zwischen den Statorpaketen (2) angeordnet ist,
**dadurch gekennzeichnet, dass** die Erregerspule (9) in Form eines aufgewickelten Drahtes vorhanden ist, der in einem Aluminiumkörper (10) eingeschlossen ist, das auf seiner radial äußeren Seite eine Buchse (11) aufweist, die den aufgewickelten Draht fest umschließt,
und dass die Abstandsplatte (13) mit ihren Seitenflächen an den Statorpaketen (2) anliegt, mit ihrer radial Außenendefläche an dem Körper (1) anliegt, und mit ihrer radial Innenendefläche an der radial Außenseite des Erregerspulenkörper (10) anliegt.

2. Elektromotor nach Anspruch 1, wobei der Motorkörper (1) zusätzlich einen Flüssigkeitskühlmantel aufweist, der in Form von Wirbelelementen ausgebildet ist, die über die gesamte Körperoberfläche angeordnet sind.

3. Elektromotor nach Anspruch 2, wobei die Wirbelelemente in Form von Vorsprüngen ausgebildet sind, die in ihrer Größe und Form ausgebildet sind, sodass sie bei einer Flüssigkeitsdurchflussrate mehrere Wirbel erzeugen.

4. Elektromotor nach Anspruch 1, wobei der Elektromotor zusätzlich einen Rotorpositionssensor (14) umfasst, der aus einem Magnetsystem und Magnetfeldkonzentratoren besteht, wobei der Sensor (14) an dem hinteren Motorschutz angeordnet ist.

## Revendications

1. Moteur électrique sans collecteurs à réluctance avec excitateur indépendant comprenant :
un corps (1) avec deux paquets de stator (2) comportant des encoches pour empiler les enroulements de phase (3),
un arbre (4) réalisé en matériau non magnétique et comportant une bague (6) réalisée en matériau magnétiquement doux montée sur celui-ci, deux paquets de rotor (5) étant montés sur la bague (6),
un bouclier avant (7) et un bouclier arrière (8) avec roulements, l'arbre (4) étant installé dans ceux-ci,
dans lequel une bobine toroïdale d'excitation (9) est étroitement fixée radialement à l'intérieur du stator et axialement entre les paquets de rotor (5), et une plaque d'écartement en aluminium (13) est disposée axialement entre les paquets de stator (2),
**caractérisé en ce que** ladite bobine d'excitation (9) est sous forme de fil enroulé enfermé dans un corps en aluminium (10) comportant, sur son côté radialement externe, une virole (11) serrant étroitement le fil enroulé,
et **en ce que** la plaque d'écartement (13) est contiguë aux paquets de stator (2) par ses côtés latéraux, avec le corps (1) par sa surface d'extrémité radialement externe et avec le côté radialement externe du corps de la bobine d'excitation (10) par sa surface d'extrémité radialement interne.

2. Moteur électrique selon la revendication 1, dans lequel le corps du moteur (1) comporte en outre une enveloppe de refroidissement liquide réalisée sous forme d'éléments de tourbillon disposés sur toute la surface du corps.

3. Moteur électrique selon la revendication 2, dans lequel les éléments de tourbillon sont réalisés sous forme de projections dimensionnées et façonnées de manière à générer de multiples tourbillons à un débit d'écoulement de liquide.

4. Moteur électrique selon la revendication 1, dans lequel le moteur électrique comprend en outre un capteur de position du rotor (14) constitué d'un système magnétique et de concentrateurs de champ magnétique, ledit capteur (14) étant disposé sur le bouclier arrière du moteur.
